# FASCICULE DE BREVET EUROPEEN

(11) **EP 1 172 870 B1**
(45) Date de publication et mention de la délivrance du brevet: **19.03.2008**
(21) Numéro de dépôt: 01401672.9
(22) Date de dépôt: 25.06.2001
(51) Int. Cl.: H01M 4/32, H01M 4/52

(54) **Matériau conducteur pour électrode de générateur électrochimique secondaire a électrolyte alcalin**
Leitfähiges Material für Sekundärbatterie-Elektrode mit alkalischem Elektrolyt
Conductive material for electrode of secondary battery with alkali electrolyte

(30) Priorité: 13.07.2000 FR 0009200
(43) Date de publication de la demande: 16.01.2002
(73) Titulaire: SAFT GROUPE SA, 93170 Bagnolet (FR)
(72) Inventeur: Bernard, Patrick, 33000 Bordeaux (FR); Audry, Claudette, 33520 Bruges (FR)
(74) Mandataire: Pochart, François

(56) Documents cités:
- EP-A- 0 716 462
- US-A- 4 546 058
- US-A- 5 965 295
- PATENT ABSTRACTS OF JAPAN vol. 1996, no. 04, 30 avril 1996 (1996-04-30) -& JP 07 320735 A (SANYO ELECTRIC CO LTD), 8 décembre 1995 (1995-12-08)

## Description

La présente invention se rapporte à un matériau conducteur pour électrode, et plus particulièrement au matériau conducteur destiné à être utilisé dans l'électrode positive d'un générateur électrochimique secondaire à électrolyte alcalin. Elle s'étend en outre au procédé de fabrication de ce matériau et aux électrodes le contenant.

Une électrode non-frittée au nickel, dites aussi empâtée ou plastifiée, se compose d'un support servant de collecteur de courant sur lequel on enduit une pâte contenant la matière active et un liant, à laquelle on ajoute le plus souvent un matériau conducteur. Lors de la fabrication de l'électrode, un solvant volatil est ajouté à la pâte pour ajuster sa viscosité afin de faciliter la mise en forme. Une fois la pâte déposée sur ou dans le support, l'ensemble est comprimé et séché pour obtenir une électrode de la densité et de l'épaisseur souhaitée.
Dans une électrode positive de générateur à électrolyte alcalin, la matière active est le plus souvent constituée d'un hydroxyde à base de nickel. L'hydroxyde de nickel est un composé peu conducteur qui nécessite l'adjonction dans l'électrode d'un matériau permettant une bonne percolation électrique. La pâte contient donc habituellement un matériau conducteur qui peut être notamment un composé du cobalt tel que du cobalt métallique Co, de l'hydroxyde de cobalt Co(OH)₂ et/ou un oxyde de cobalt comme le monoxyde CoO. On a proposé d'utiliser comme matériau conducteur par exemple un oxyde de cobalt non stoechiométrique de formule CoₓO où 0,93 ≤ x ≤ 0,97, un oxyde de cobalt de formule CoOₓ où 0 < x < 1, ou bien encore un monoxyde de cobalt CoO dont la surface des particules est recouverte de groupes hydroxyles ou d'une couche d'oxyde de cobalt de valence au moins égale à 2 comme Co₂O₃ ou Co₃O₄.

Lors de la première charge d'un accumulateur alcalin, ces composés sont oxydés en oxyhydroxyde de cobalt CoOOH dans lequel le cobalt est porté à un degré d'oxydation supérieur ou égal à +3. Cet oxyhydroxyde de cobalt est stable dans le domaine normal de fonctionnement de l'électrode positive au nickel et insoluble dans l'électrolyte alcalin. Il assure la percolation électrique de l'électrode.

Stocké à l'état complètement déchargé, un accumulateur alcalin possédant une électrode positive au nickel non-frittée voit sa tension décroître avec le temps. Lorsque la durée du stockage dépasse quelques mois, sa tension tend vers 0V. Dans ces conditions, l'oxyhydroxyde de cobalt se réduit lentement. Le cobalt est porté d'abord au degré d'oxydation +2,66 dans Co₃O₄, puis il atteint le degré d'oxydation +2 dans Co(OH)₂. Or l'hydroxyde de cobalt Co(OH)₂ est un composé très soluble dans l'électrolyte. Par conséquent, on observe après une période de stockage de plusieurs mois, une perte de la conductivité due à la dissolution partielle du réseau percolant de l'électrode non-frittée. Il en résulte une perte irréversible de capacité qui peut dépasser 15%. Cette perte irréversible de capacité se produit quel que soit le composé de cobalt actuellement connu qui est introduit dans la pâte.

La présente invention a pour but de proposer un matériau conducteur pour une électrode au nickel non-frittée tel que la perte irréversible de capacité en stockage de cette électrode soit fortement réduite par rapport aux électrodes actuellement connues, tout en conservant un rendement élevé.

L'objet de la présente invention est un matériau conducteur d'électrode comprenant un composé oxydé du cobalt, caractérisé en ce que ledit composé est un oxyde de cobalt non-stoechiométrique de structure spinelle directe, de formule CO²⁺ₓCO³⁺_{y}O₄ avec 0,73 ≤ x ≤ 0,80 et 1,87 ≤ y ≤ 1,95. Avantageusement sa conductivité électrique est supérieure à 5.10⁻³ S/cm.

Ce composé est isomorphe du spinelle (aluminate de magnésium MgAl₂O₄). Sa structure est basée sur une maille élémentaire cubique qui comprend huit cellules élémentaires à faces centrées d'ions oxygène. Dans le cas présent les ions divalents Co²⁺ sont situés dans les sites tétraédriques de la maille cubique, les ions trivalents Co³⁺ sont situés dans les sites octaédriques de la maille, et les ions oxygène se répartissent aux sommets des tétraèdres et des octaèdres. Cette structure est appelée structure "normale" ou "directe", par opposition à la structure inverse où les ions divalents et trivalents sont disposés différemment. Dans une structure de ce type correspondant à la formule générale AB₂O₄, il y a habituellement deux fois plus d'ions trivalents que d'ions divalents.

Une caractéristique importante du composé selon la présente invention est que l'oxyde de cobalt a une structure spinelle perturbée. Il est non-stoechiométrique, c'est à dire qu'il présente un déficit en cobalt sur les deux sites cristallographiques du cobalt, le site des ions Co²⁺ étant particulièrement affecté. La teneur en oxygène reste inchangée avec une stoechiométrie de 4.
Cette structure particulière lui confère des propriétés originales. Alors qu'un oxyde de cobalt stoechiométrique Co₃O₄ est antiferromagnétique avec une transition de NEEL à 40°K, on observe pour le composé non-stoechiométrique selon l'invention l'apparition d'une transition ferrimagnétique à 20°K qui résulte probablement de la perturbation de la structure spinelle. Dans certains cas on observe à 20°K une transition ferromagnétique.

Le procédé de fabrication d'un matériau conducteur d'électrode selon la présente invention, tel que décrit précédemment, comprend les étapes suivantes :
- on introduit dans un réacteur une solution basique composée d'un mélange de potasse KOH et de soude caustique NaOH, ladite solution étant agitée mécaniquement,
- on installe dans ladite solution un flux constant d'oxygène,
- on introduit dans ladite solution une poudre initiale contenant de l'hydroxyde de cobalt, et on la laisse au contact de ladite solution,
- on sépare une poudre finale de ladite solution,
- on lave et on sèche ladite poudre finale.
   De préférence ladite solution est composée d'un mélange de potasse KOH de concentration 6N et de soude caustique NaOH de concentration 4N. L'agitation mécanique a pour but de mettre la poudre en suspension dans la solution. L'agitation peut être obtenue à l'aide d'une hélice par exemple. Pour que la réaction se produise de manière homogène, l'entrée du flux d'oxygène s'effectue de préférence au fond du réacteur pour améliorer la répartition de l'oxygène au sein de la solution.
   A titre d'exemple, la température de la solution pourra être comprise entre 80°C et 120°C, et le temps de contact de la poudre avec la solution compris entre 5 heures et 48h.
   Selon une première variante, ladite poudre initiale est composée d'hydroxyde de cobalt.
   Selon une autre variante ladite poudre initiale est constituée de particules à base d'hydroxyde de nickel recouvertes d'une couche d'hydroxyde de cobalt.

Après réaction, la poudre finalement obtenue est séparée de la solution. La poudre finale est ensuite lavée, de préférence à l'eau, puis séchée à température modérée, par exemple sous vide.

La présente invention a aussi pour objet une électrode de générateur électrochimique secondaire à électrolyte alcalin comprenant un collecteur de courant et une couche contenant un liant, des particules d'une matière électrochimiquement active et un matériau conducteur comprenant un composé oxydé du cobalt qui est un oxyde de cobalt non-stoechiométrique, de structure spinelle directe et de formule CO²⁺ₓCO³⁺_{y}O₄ avec 0,73 ≤ x≤ 0,80 et 1,87 ≤ y ≤ 1,95 dont la conductivité électrique est supérieure à 5.10⁻³ S/cm. Dans cette électrode, la proportion pondérale dudit matériau conducteur dans ladite couche est de préférence comprise entre 4% et 10% de ladite matière active.
Dans une première variante, ledit matériau conducteur est sous forme de particules. Dans la couche, les particules du matériau conducteur pulvérulent sont mélangées aux particules de ladite matière active et au liant. De préférence le diamètre moyen des particules du matériau conducteur est inférieur à 2µm.
Dans une seconde variante, ledit matériau conducteur est sous forme d'un revêtement recouvrant les particules de ladite matière active. Les particules de matière active sont ainsi enrobées par une couche du matériau conducteur.
Dans une troisième variante, ledit matériau conducteur est à la fois sous forme de particules mélangée aux particules de ladite matière active et sous forme d'un revêtement recouvrant les particules de ladite matière active.

Le collecteur de courant peut être un support conducteur bidimensionnel, comme un feuillard plein ou perforé, un métal déployé, une grille ou un tissu, ou un support conducteur tridimensionnel poreux comme un feutre ou une mousse. Ce support peut être à base de métal ou de carbone.

Le liant comprend au moins un composé choisi parmi la carboxyméthylcellulose (CMC), l'hydroxypropyl-méthylcellulose (HPMC), l'hydroxyéthylcellulose (HEC), l'hydroxypropylcellulose (HPC), un copolymère de styrène, d'éthylène, de butylène et de styrène (SEBS), un terpolymère de styrène, de butadiène et de vinylpyridine (SBVR), un copolymère de styrène_et de butadiène (SBR) éventuellement carboxylé, un copolymère d'acrylonitrile et de butadiène (NBR), le polytétrafluoroéthylène (PTFE), un copolymère fluoré d'éthylène et de propylène (FEP), le polyhexafluoropropylène (PPHF), le polyfluorure de vinylidène (PVDF), et l'éthylvinylalcool (EVA).

Selon une première variante ledit liant est un mélange d'un polymère cristallin et d'un élastomère.
Le polymère cristallin peut être choisi parmi un polymère fluoré, comme le polytétrafluoroéthylène (PTFE), un copolymère fluoré d'éthylène et de propylène (FEP), le polyhexafluoropropylène (PPHF), et le polyfluorure de vinylidène (PVDF).
L'élastomère peut être choisi parmi un copolymère de styrène, d'éthylène, de butylène et de styrène (SEBS), un terpolymère de styrène, de butadiène et de vinylpyridine (SBVR), un copolymère de styrène et de butadiène (SBR) et un copolymère d'acrylonitrile et de butadiène (NBR).

Selon une deuxième variante, ledit liant comprend un premier composant choisi parmi un polymère fluoré et au moins un deuxième composant choisi parmi un composé cellulosique, un composé fluoré, un élastomère ou l'éthylvinylalcool (EVA).
Le polymère fluoré peut être choisi parmi le polytétrafluoroéthylène (PTFE), un copolymère fluoré d'éthylène et de propylène (FEP), le polyhexafluoropropylène (PPHF), et le polyfluorure de vinylidène (PVDF).
Le composé cellulosique peut être choisi parmi la carboxyméthylcellulose (CMC), l'hydroxypropylméthylcellulose (HPMC), l'hydroxyéthylcellulose (HEC) et l'hydroxypropylcellulose (HPC).
Le composé fluoré peut être choisi parmi le polytétrafluoroéthylène (PTFE), un copolymère fluoré d'éthylène et de propylène (FEP), le polyhexafluoropropylène (PPHF), et le polyfluorure de vinylidène (PVDF).
L'élastomère peut être choisi parmi un copolymère de styrène, d'éthylène, de butylène et de styrène (SEBS), un terpolymère de styrène, de butadiène et de vinylpyridine (SBVR), un copolymère de styrène et de butadiène (SBR) et un copolymère d'acrylonitrile et de butadiène (NBR).

Selon une troisième variante ledit liant est un mélange d'éthylvinylalcool (EVA) et d'un élastomère.
L'élastomère peut être choisi parmi un copolymère de styrène, d'éthylène, de butylène et de styrène (SEBS), un terpolymère de styrène, de butadiène et de vinylpyridine (SBVR), un copolymère de styrène et de butadiène (SBR) et un copolymère d'acrylonitrile et de butadiène (NBR).

La matière électrochimiquement active est un hydroxyde à base de nickel. On entend par "hydroxyde à base de nickel" un hydroxyde de nickel ou un hydroxyde contenant principalement du nickel, en particulier un hydroxyde de nickel contenant au moins un hydroxyde syncristallisé d'un élément choisi parmi le zinc (Zn), le cadmium (Cd), le magnésium (Mg), l'aluminium (Al) et le cobalt (Co), et au moins un hydroxyde syncristallisé d'un élément choisi parmi le cobalt (Co), le manganèse (Mn), l'aluminium (Al), l'yttrium (Y), le calcium (Ca), le strontium (Sr), le zirconium (Zr), le cuivre (Cu). Un hydroxyde syncristallisé contenu dans l'hydroxyde de nickel est un hydroxyde formant une solution solide avec l'hydroxyde de nickel, i.e. occupant, en proportion continûment variable, les sites atomiques définis par le réseau cristallin de l'hydroxyde de nickel.

Ladite pâte peut contenir en outre au moins un autre composé choisi parmi les composés du zinc comme ZnO ou Zn(OH)₂, de l'yttrium comme Y₂O₃ ou Y(OH)₃, et du calcium comme CaO, Ca(OH)₂ ou CaF₂. Ce composé est habituellement ajouté sous forme pulvérulente.
Afin de faciliter la réalisation de l'électrode, ladite pâte peut comprendre en outre un épaississant, notamment un composé cellullosique choisi parmi le sel de sodium de la carboxyméthylcellulose (CMC), l'hydroxypropylméthylcellulose (HPMC), l'hydroxypropylcellulose (HPC), et l'hydroxyéthylcellulose (HEC).
Une électrode positive selon l'invention peut être utilisée dans tout générateur à électrolyte alcalin, comme par exemple les générateurs contenant les couples nickel-métal hydrurable, nickel-cadmium, nickel-fer, nickel-zinc, nickel-hydrogène.

D'autres caractéristiques et avantages de la présente invention apparaîtront à la lecture de la description qui suit d'un mode de réalisation

### EXEMPLE 1

Un générateur électrochimique secondaire étanche nickel-métal hydrurable Ni-MH de format AA et dont la capacité nominale C est de 1200mAh est fabriqué de la manière suivante.
L'électrode positive comporte un support conducteur servant de collecteur de courant, qui est une mousse de nickel de porosité environ 95%, et une pâte. La pâte contient de la poudre d'une matière électrochimiquement active et un matériau conducteur qui est un composé oxydé du cobalt sous forme pulvérulente. Elle a comme composition pondérale, exprimée en % par rapport au poids de la pâte :

| | |
|---|---|
| matière électrochimiquement active | 92,7% |
| matériau conducteur pulvérulent | 6% |
| liant | 1% |
| épaississant | 0,3% |

Les particules de la matière électrochimiquement active sont constituées d'un hydroxyde à base de nickel. Le liant est du polytétrafluoroéthylène (PTFE). L'épaississant est un sel de sodium de la carboxyméthylcellulose (CMC). La viscosité de la pâte est ensuite ajustée avec de l'eau. La pâte est introduite dans la porosité du support conducteur. L'ensemble est ensuite séché afin d'en éliminer l'eau, puis laminé pour obtenir l'électrode.
L'électrode négative de type connu a comme matière électrochimiquement active un composé intermétallique capable de former un hydrure une fois chargé. Sa capacité est supérieure à celle de l'électrode positive. Chaque électrode positive est accolée à une électrode négative dont elle est isolée par un séparateur constitué d'un non-tissé de polypropylène pour former le faisceau électrochimique. Le faisceau spiralé est inséré dans un godet métallique et imprégné d'un électrolyte alcalin qui est une solution alcaline aqueuse constituée d'un mélange d'hydroxyde de potassium KOH 7,4N, d'hydroxyde de lithium LiOH 0,5N et d'hydroxyde de sodium NaOH 0,4N.
On réalise de la manière décrite précédemment un générateur électrochimique A dont l'électrode positive contient un matériau conducteur connu de l'art antérieur : c'est un oxyde de cobalt de formule CoO qui n'a pas une structure spinelle directe.

### EXEMPLE 2

On réalise un générateur électrochimique B de la manière décrite dans l'exemple 1, mais dont l'électrode positive contient comme matériau conducteur un oxyde de cobalt de formule Co₃O₄ qui a une structure spinelle directe mais ne fait pas partie de l'invention.

### EXEMPLE 3

On réalise un générateur électrochimique C de la manière décrite dans l'exemple 1, mais dont l'électrode positive contient un matériau de formule Co²⁺_{0.84}Co³⁺_{1.98}O₄ qui ne fait pas partie de l'invention.

### EXEMPLE 4

On réalise un générateur électrochimique D de la manière décrite dans l'exemple 1, mais dont l'électrode positive contient un matériau de formule Co²⁺_{0.72}Co³⁺_{1.85}O₄ qui ne fait pas partie de l'invention.

### EXEMPLE 5

On réalise un générateur électrochimique E de la manière décrite dans l'exemple 1, mais dont l'électrode positive contient un matériau conducteur selon la présente invention de formule Co²⁺_{0,76}Co³⁺_{1,88}O₄.
Le matériau conducteur est fabriqué de la manière suivante. On ajoute 100g d'hydroxyde de cobalt pulvérulent dans 1 litre d'une solution contenant de la potasse KOH de concentration 6N et de la soude caustique NaOH de concentration 4N. La solution est portée et maintenue à une température de 90°C. La suspension est agitée à l'aide d'une hélice effectuant 100 rotations par minute. Un flux constant d'oxygène est introduit au fond du réacteur à travers une plaque de verre fritté. Après 24 heures, la suspension est filtrée et les particules oxydées d'hydroxyde de cobalt sont recueillies et lavées à l'eau. Les particules sont ensuite séchées sous vide à une température de 40°C pendant 12 heures.

### EXEMPLE 6

On réalise un générateur électrochimique F analogue au générateur E précédemment décrit mais dont le matériau conducteur selon la présente invention de formule Co²⁺_{0.76}Co³⁺_{1.88}O₄ est ajouté sous forme d'un revêtement autour des particules d'hydroxyde à base de nickel constituant la matière active.
Le matériau conducteur est fabriqué de la manière suivante. On ajoute 100g d'une poudre constituée de particules d'hydroxyde de nickel revêtues d'une couche d'hydroxyde de cobalt dans 1 litre d'une solution contenant de la potasse KOH de concentration 6N et de la soude caustique NaOH de concentration 4N. La solution est portée et maintenue à une température de 90°C. La suspension est agitée à l'aide d'une hélice effectuant 100 rotation par minutes. Un flux constant d'oxygène est introduit au fond du réacteur à travers une plaque de verre fritté. Après 10 heures, la suspension est filtrée et les particules oxydées d'hydroxyde de cobalt sont recueillies et lavées à l'eau. Les particules sont ensuite séchées sous vide à une température de 40°C pendant 12 heures.

Après un repos initial de 48 heures, des générateurs A à F sont testés électrochimiquement. Une évaluation de la perte irréversible en stockage, à l'état complètement déchargé, est effectuée dans les conditions suivantes :

| | |
|---|---|
| cycle 1 : | charge à 0,1 Ic pendant 16 heures à 20°C, où Ic est le courant nécessaire pour décharger la capacité nominale C du générateur en 1 heure, |
| | décharge à 0,2 Ic jusqu'à une tension d'arrêt de 1 Volt ; |
| cycles 2 et 3 : | charge à Ic pendant 1,2 heures à 20°C, |
| | décharge à Ic jusqu'à une tension d'arrêt de 1 Volt. |

Les générateurs A à F sont stockés à l'état déchargé à température ambiante (20°C) sur une résistance de 1Ω pendant 3 jours. Après stockage, on effectue une mesure de capacité restante dans les conditions suivantes.

| | |
|---|---|
| cycles 4 à 9 : | charge à Ic pendant 1,2 heure à 20°C, |
| | décharge à Ic jusqu'à 1 Volt. |

Les résultats obtenus sont rassemblés dans le tableau suivant.

**TABLEAU**

| | | | | | Invention | |
|---|---|---|---|---|---|---|
| Générateur | A | B | C | D | E | F |
| Conductivité (S/cm) | 10⁻² | 4.10⁻⁷ | 6.10⁻⁶ | 3.10⁻⁵ | 2.10⁻² | 2.10⁻² |
| Rendement au cycle 3 (mAh/g) | 240 | 175 | 185 | 190 | 240 | 247 |
| Perte de capacité lors du stockage (%) | 15 | 10 | 8 | 9 | 1 | 1 |

On comprend d'après ces résultats que les générateurs B à D comprenant des composés conducteurs à base d'oxyde de cobalt spinelle directe de composition en dehors de l'invention ne permettent pas d'obtenir des rendements électriques satisfaisants du fait d'une conductivité électrique trop faible.
Les composés conducteurs à base d'oxyde de cobalt spinelle directe de composition dans le domaine de l'invention, utilisés dans les générateurs E et F, permettent d'obtenir une très faible perte de capacité en stockage combinée à un rendement élevé, égal ou supérieur à celui du générateur de l'art antérieur A. On comprend aussi que le mode d'ajout du composé conducteur sous forme de revêtement autour des particules de matière électrochimiquement active, permet d'obtenir un gain significatif de rendement (+3%) par rapport au mode d'ajout sous forme de poudre dans l'électrode.

Bien entendu, la présente invention n'est pas limitée aux modes de réalisation décrits. En particulier, on pourra sans sortir du cadre de l'invention modifier la composition de l'hydroxyde et la nature des éléments syncristallisés. On pourra également envisager l'utilisation d'un support conducteur d'électrode de nature et de structure différente. Enfin, les différents ingrédients entrant dans la réalisation de la pâte, ainsi que leurs proportions relatives, pourront être changés. Notamment des additifs destinés à faciliter la mise en forme de l'électrode, comme un épaississant ou un stabilisateur de texture, pourront y être incorporés dans des proportions mineures.

## Revendications

1. Matériau conducteur d'électrode comprenant un composé oxydé du cobalt, **caractérisé en ce que** ledit composé est un oxyde de cobalt non-stoechiométrique de structure spinelle directe, de formule Co²⁺ₓCo³⁺_{y}O₄ avec 0,73 ≤ x ≤ 0,80 et 1,87 ≤ y ≤ 1,95.

2. Matériau selon la revendication 1, dans lequel ledit composé a une conductivité électrique supérieure à 5.10⁻³ S/cm.

3. Procédé de fabrication d'un matériau conducteur d'électrode selon la revendication 1, comprenant les étapes suivantes :
- on introduit dans un réacteur une solution basique composée d'un mélange de potasse KOH et de soude caustique NaOH, ladite solution étant agitée mécaniquement,
- on installe dans ladite solution un flux constant d'oxygène,
- on introduit dans ladite solution une poudre initiale contenant de l'hydroxyde de cobalt, et on la laisse au contact de ladite solution,
- on sépare une poudre finale de ladite solution,
- on lave et on sèche ladite poudre finale.

4. Procédé selon la revendication 3, dans lequel ladite poudre initiale est constituée d'hydroxyde de cobalt.

5. Procédé selon la revendication 3, dans lequel ladite poudre initiale est constituée de particules à base d'hydroxyde de nickel recouvertes d'une couche d'hydroxyde de cobalt.

6. Electrode positive de générateur électrochimique secondaire à électrolyte alcalin comprenant un collecteur de courant et une couche contenant un liant, des particules d'une matière électrochimiquement active et un matériau conducteur selon la revendication 1, la proportion pondérale dudit matériau conducteur dans ladite couche étant comprise entre 4% et 10% de ladite matière active.

7. Electrode selon la revendication 6, dans lequel ledit matériau conducteur est sous forme de particules.

8. Electrode selon la revendication 7, dans lequel le diamètre moyen des particules dudit matériau conducteur est inférieur à 2µm.

9. Electrode selon la revendication 6, dons lequel ledit matériau conducteur est sous forme d'un revêtement recouvrant les particules de ladite matière active.

10. Electrode selon la revendication 6, dans lequel ledit matériau conducteur est à la fois sous forme de particules mélangées aux particules de ladite matière active, et sous forme d'un revêtement recouvrant les particules de ladite matière active.

## Claims

1. An electrode conductive material comprising an oxidized cobalt compound **characterized in that** the said compound is a non-stoichiometric cobalt oxide which has a direct spinel structure of formula Co²⁺xCo³⁺_{y}O₄, with 0.73 ≤ x ≤ 0.80 and 1.87≤y≤ 1.95.

2. The material according to claim 1, in which said compound has an electrical conductivity greater than 5x10⁻³ S/cm.

3. A method of fabricating an electrode conductive material according to claim 1, comprising the following steps:
- a basic solution made up of a mixture of potassium hydroxide KOH and sodium hydroxide NaOH is introduced into a reactor and stirred mechanically,
- a constant flow of oxygen is established in said solution,
- an initial powder containing cobalt hydroxide is introduced into said solution and left in contact with said solution,
- a final powder is separated from said solution,
- said final powder is washed and dried.

4. The method according to claim 3, wherein said initial powder is cobalt hydroxide.

5. The method according to claim 3, wherein said initial powder consists of particles based on nickel hydroxide covered with a layer of cobalt hydroxide.

6. An alkaline electrolyte secondary storage cell positive electrode including a current collector and a layer containing a binder, particles of an electrochemically active material and a conductive material according to claim 1, the proportion by weight of said conductive material in said layer being from 4% to 10% of said active material.

7. The electrode claimed in claim 6, wherein said conductive material is in the form of particles.

8. The electrode claimed in claim 7, wherein the average diameter of the particles of said conductive material is less than 2 µm.

9. The electrode claimed in claim 6, wherein said conductive material is in the form of a coating covering the particles of said active material.

10. The electrode claimed in claim 6, wherein said conductive material is both in the form of particles mixed with particles of said active material and in the form of a coating covering the particles of said active material.

## Patentansprüche

1. Leitfähiges Elektrodenmaterial, welches eine Kobaltoxidverbindung umfasst, **dadurch gekennzeichnet, dass** es sich bei der Verbindung um ein nicht-stöchiometrisches Kobaltoxid mit direkter Spinellstruktur nach der Formel Co²⁺ₓCO³⁺_{y}O₄ handelt, wobei 0,73 ≤ x ≤ 0,80 und 1,87 ≤ y ≤ 1,95 ist.

2. Material gemäß dem Anspruch 1, wobei die Verbindung eine elektrische Leitfähigkeit von mehr als 5,10⁻³ S/cm aufweist.

3. Verfahren zur Herstellung eines leitfähigen Elektrodenmaterials gemäß dem Anspruch 1, welches die folgenden Schritte umfasst:
- Beschicken eines Reaktors mit einer basischen Lösung, die sich aus Kalilauge KOH und Natronlauge NaOH zusammensetzt, wobei die Lösung mechanisch gerührt wird,
- Einrichten eines konstanten Sauerstoffflusses in der Lösung,
- Hinzufügen eines kobalthydroxidhaltigen Ausgangspulvers zu der Lösung, woraufhin das Pulver mit der Lösung in Kontakt gelassen wird,
- Abtrennen des pulverförmigen Endproduktes von der Lösung,
- Waschen und Trocknen des pulverförmigen Endproduktes.

4. Verfahren gemäß dem Anspruch 3, wobei das Ausgangspulver aus Kobalthydroxid besteht.

5. Verfahren gemäß dem Anspruch 3, wobei das Ausgangspulver aus Partikeln auf Basis von Nickelhydroxid besteht, welche mit Kobalthydroxid beschichtet sind.

6. Positive Elektrode eines elektrochemischen Sekundärgenerators mit alkalischem Elektrolyt, welche einen Stromsammler umfasst sowie eine Schicht, welche ein Bindemittel, Partikel aus einem elektrochemisch aktiven Material und ein leitfähiges Material gemäß dem Anspruch 1 enthält, wobei in der Schicht der relative Gewichtsanteil des leitfähigen Materials zwischen 4 % und 10% des aktiven Materials beträgt.

7. Elektrode gemäß dem Anspruch 6, wobei das leitfähige Material in Form von Partikeln vorliegt.

8. Elektrode gemäß dem Anspruch 7, wobei der mittlere Durchmesser der Partikel des leitfähigen Materials weniger als 2 µm beträgt.

9. Elektrode gemäß dem Anspruch 6, wobei das leitfähige Material in Form einer Beschichtung vorliegt, welche die Partikel aus dem aktiven Material bedeckt.

10. Elektrode gemäß dem Anspruch 6, wobei das leitfähige Material sowohl in Form von Partikeln, welche den Partikeln aus dem aktiven Material beigemischt sind, als auch in Form einer Beschichtung, welche die Partikel aus dem aktiven Material bedeckt, vorliegt.
